# EUROPEAN PATENT SPECIFICATION

(11) **EP 0 702 192 B1**
(45) Date of publication and mention of the grant of the patent: **02.12.1998**
(21) Application number: 95202078.2
(22) Date of filing: 31.07.1995
(51) Int. Cl.: F16M 13/02

(54) **A clamp for supporting optical and photographic equipment**
Klemmstativ für optische oder photographische Einrichtung
Etrier de serrage pour le support d'équipement optique ou photographique

(30) Priority: 13.09.1994 IT PD940158
(43) Date of publication of application: 20.03.1996
(73) Proprietor: LINO MANFROTTO + CO. S.p.A., 36061 Bassano del Grappa (IT)
(72) Inventor: Speggiorin, Paolo, 36065 Mussolente (Vicenza) (IT)
(74) Representative: Cantaluppi, Stefano

(56) References cited:
- CH-A- 167 216
- DE-C- 612 722
- GB-A- 2 128 363
- GB-A- 2 147 352
- US-A- 4 582 307

## Description

The present invention relates to a clamp for supporting optical and photographic equipment according to the preamble to claim 1.

Clamps of this type are used widely for fixing optical or photographic equipment to supports such as tubular elements, table tops or something else found on location.

Clamps having the above outlined features are known from DE-C-612722, CH-A-167216 and US-A-4582307.

Typically, these clamps are formed with two jaws which are rigidly interconnected by a central portion and one of which carries a member with a threaded rod. If the rod of the member is screwed upwards by means of a suitable grip an end plate of the rod moves towards the other jaw until the plate is clamped against the support disposed between the jaws.

The plate can thus be moved towards the support by the repeated rotation of the grip in order to screw the rod until it is clamped against the support. It is also necessary to operate the grip repeatedly in order to unscrew the rod and thus move it away from the jaw.

Whilst ensuring effective clamping of the clamp onto the support, both of these operations involve the disadvantage of a relatively slow operation of the rod as well as the need to use two hands, one for holding the clamp in the preselected position and one for rotating the grip.

The problem upon which the present invention is based is that of providing a clamp with a structure and design such as to overcome all of the disadvantages complained of with reference to the prior art mentioned.

This Problem is solved by a clamp according to the appended claims.

The characteristics and advantages of the invention will become clearer from the following detailed description of a preferred embodiment thereof, described by way of non-limiting example with reference to the appended drawings, in which:
- Figure 1 is a partially-sectioned side elevational view of a clamp formed according to the present invention,
- Fiaure 2 is a sectional view of a detail of the clamp of Figure 1 at a different stage of its operation,
- Figure 3 is a sectional view of the detail indicated by the arrow III of Figure 1, on an enlarged scale,
- Figure 4 is a sectional view taken on the line IV-IV of Figure 1, on an enlarged scale.

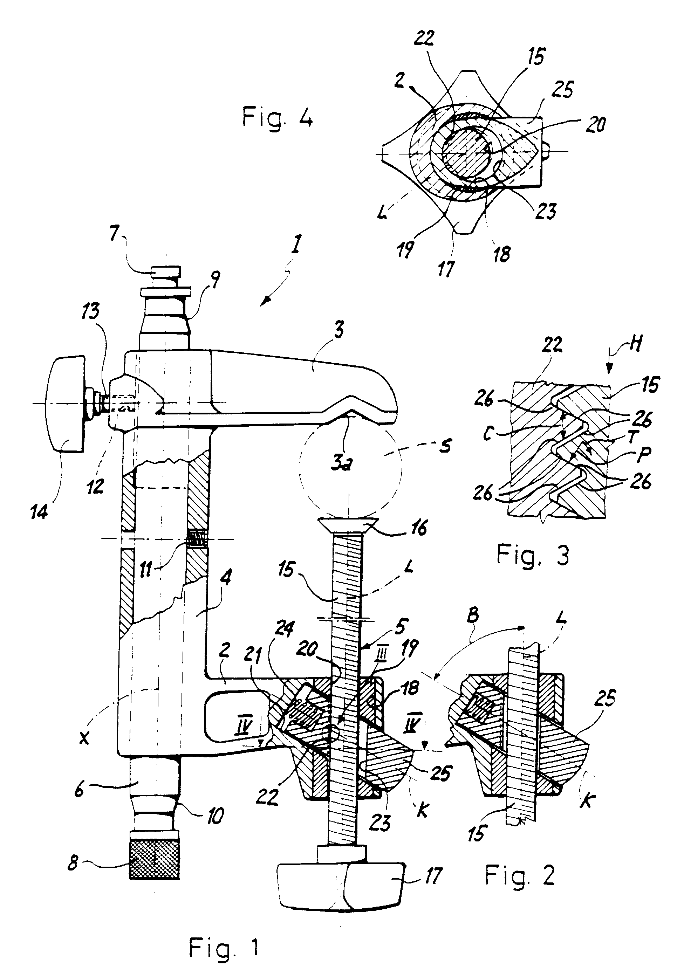

In Figure 1, a clamp of the type used for supporting optical and photographic equipment on a support such as, for example, a tubular element, generally indicated S and shown in broken outline, is generally indicted 1.

The clamp 1 comprises first and second jaws, indicated 2 and 3, respectively, facing one another and connected at right anales to the opposite ends of a central portion 4 with a longitudinal axis X. The clamp 1 also comprises a member 5 with a threaded rod 15 having a longitudinal axis L parallel to the axis X, mounted on the jaw 2 and slidable therein along the axis L.

A rod-like support 6 is slidable adjustably along the axis X in the central portion 4 and carries respective attachment elements 7, 8 for photographic equipment at its opposite axial ends. Beside each attachment element 7, 8 is a respective recess 9, 10 in which a retaining element 11 housed in the central portion 4 and urged resiliently against the support 6 can be releasably engaged. When the retaining element 11 is engaged in the recess 9 or 10, it prevents the support 6 from coming out of the central portion 4, constituting means for preventing the loss of the support.

A threaded hole 12 is formed in the central portion 4 in a position opposite the jaw 3. A screw 13 with an operating grip 14 is screwed into the hole 12. The screw 13 serves for clamping the support 6 in the preselected position relative to the clamp.

A plate 16 and a grip 17 are mounted at the opposite axial ends of the rod 15, respectively. The jaw 3 has a concave surface 3a in a position facing the plate 16 for enabling the clamp to be clamped onto curved surfaces such as tubes, tree branches, and the like.

The rod 15 is housed slidingly with radial clearance in an axial hole 20 in a bush 19 fitted and restrained axially in a seat 18 in the jaw 2.

A blind hole 21 is formed in the jaw 2 in a position such as to intersect the bush 19 and the hole 20; a push-button 25 is mounted in the hole 21 for sliding in a direction identified by the axis K of Figure 1, intersecting the axis L of the rod 15.

The push-button 25 projects front the jaw 2 and has a hole 23 extending through it parallel to the axis L. An internally threaded sector 22 formed by partial threading of the hole 23 can surround the rod 15 for no more than half of its circumference.

The rod 15 is housed in the hole 23 with a radial clearance such that the internally threaded sector 22 can be moved along the axis K by means of the push button 25, against the action of a spring 24, between an operative condition in which the sector and the thread of the rod 15 are mutually engaged and an inoperative condition in which the internally threaded sector 22 is disengaged from the rod 15.

The threads of the rod 15 and of the internally threaded sector 22 have a predetermined angle, indicated by the dimension C in Figure 3, between corresponding flanks of the threads, all indicated 26.

A clamping load H acting on the rod 15 results in a pressure P between the respective flanks 26 of the rod 15 and of the internally threaded sector 22 in the mutual contact condition.

The component of the pressure P directed along the axis K is indicated T in Figure 3. This axis is inclined to the axis L at an angle the size of which is indicated B in Figure 2.

The angle B and the thread angle C are selected in a manner such that the component T is zero or at most tends to urge the internally threaded sector 22 towards the operative condition, supplementing the contribution of the resilient effect of the spring 24.

The angle B is preferably smaller than or equal to 58° for a thread angle C of about 60°.

The clamp 1 is fitted on the support S in the following manner, starting from a position of the member 5 such that the plate 16 is far enough from the jaw 3 for the clamp 1 to be positioned on the support S.

The internally threaded sector 22 is moved to the inoperative condition of Figure 2 by pressure on the push-button 25 against the action of the spring 24. With the push-button 25 depressed, the rod 15 is free to slide in the jaw 2 away from and towards the jaw 3 so as to allow the plate 16 to be positioned rapidly relative to the support S.

When this positioning, in which the plate 16 is in contact with the support S, has been achieved, the push-button 25 is released and the internally threaded sector 22 is moved to the operative condition of Figure 1 by the biasing action of the spring 24. In this condition, the internally threaded sector 22 can check the clamping load H. The latter is applied by the rotation of the grip 17 so as to screw the rod 15 in the jaw 2 and clamp the support S between the jaw 3 and the plate 16. The invention thus solves the problem set, achieving many advantages. In particular, there is the advantage that the clamp can be operated very quickly and can be removed from the support even with only one hand, leaving the other hand free for other activities. In fact, it suffices to unscrew the grip by a few turns with one hand so as to remove the clamping load but not to disengage the member from the support; the clamp is then gripped like a pistol and, with the same hand, the push-button is pressed so that the rod slides freely and the clamp can be removed from the support.

## Claims

1. A clamp for supporting optical and photographic equipment, comprising first and second jaws (2, 3), a member (5) with a rod (15) mounted on the first jaw (2), restraining means between the rod (15) and the first jaw (2) for checking a clamping load (H) applied between the member (5) and the second jaw (3) and clamping means for applying the clamping load (H), wherein the restraining means can be switched selectively between an inoperative condition in which the rod (15) can slide freely relative to the first jaw (2) away from and towards the second jaw (3), and an operative condition in which the rod (15) is restrained on the first jaw (2) so as to check the clamping load (H), and wherein the rod (15) has a predetermined axis (L) and thread angle (C) and the restraining means comprise at least one internally threaded sector (22) which can surround the rod for no more than half of its circumference and is movable between the operative condition, in which the internally threaded sector (22) and the thread of the rod (15) are mutually engaged and the inoperative condition, in which the internally threaded sector (22) is disengaged from the rod (15), characterized in:
- the internally threaded sector (22) being guided for sliding in the corresponding jaw (2) along a sliding axis (K),
- said sliding axis being inclined to and intersecting the axis (L) of the thread,
- the direction of the sliding axis (K) and the thread angle (C) being selected such that the clamping load (H) acting on the rod (15) has a component (T) along said sliding axis (K) of the internally threaded sector (22),
- said component (T) of the clamping load (H) being zero or at most tending to urge the internally threaded sector (22) towards the operative condition.

2. A clamp according to Claim 1, in which the clamping means comprise the threaded rod (15) and an operative appendage (17) thereof by means of which the rod (15) can be screwed in the internally threaded sector (22).

3. A clamp according to Claims 1 or 2, in which the internally threaded sector (22) is urged resiliently towards the operative condition.

4. A clamp according to one or more of the preceding claims, in which the first jaw (2) has a push-button (25) associated with the internally threaded sector (22) for moving it towards the inoperative condition.

5. A clamp according to one or more of the preceding claims, comprising a central portion (4) which connects the laws (2, 3) rigidly and in which a rod-like support (6) is slidable adjustably and carries at least one attachment element (7, 8) for the equipment at its opposite axial ends.

6. A clamp according to Claim 5, in which the support (6) has, at its opposite ends, respective recesses (9, 10) in which a retaining element (11) mounted on the central portion (4) can be releasably engaged, the retaining element (11) and the recesses (9, 10) constituting means for preventing the loss of the rod-like support (6).

## Patentansprüche

1. Klemmstativ für eine optische und photographische Ausrüstung, mit ersten und zweiten Klemmbacken (2, 3), einem Bauteil (5) mit einer Stange (15), welches an der ersten Klemmbacke (2) angeordnet ist, einer Halteeinrichtung zwischen der Stange (15) und der ersten Klemmbacke (2) zur Sicherung einer Klemmlast (H), die zwischen dem Bauteil (5) und der zweiten Klemmbacke (3) aufgebracht ist und einer Klemmeinrichtung zur Aufbringung der Klemmlast (H), wobei die Halteeinrichtung selektiv zwischen einem Außerbetriebszustand, bei dem die Stange (15) bezüglich der ersten Klemmbacke (2) frei von der zweiten Klemmbacke (3) weg und zu dieser hin verschiebbar ist, und einem Betriebszustand schaltbar ist, bei dem die Stange (15) an der ersten Klemmbacke (2) festgelegt ist zur Sicherung der Klemmlast (H) und wobei die Stange (15) eine vorbestimmte Achse (L) und einen Gewindewinkel (C) besitzt und die Halteeinrichtung wenigstens einen mit einem Innengewinde versehenen Abschnitt (22) aufweist, der die Stange für nicht mehr als ihren halben Umfang umgibt und zwischen dem Betriebszustand, bei dem der mit einem Innengewinde versehene Abschnitt (22) und das Gewinde der Stange (15) miteinander in Eingriff stehen und dem Außerbetriebszustand bewegbar ist, bei dem der mit einem Innengewinde versehene Abschnitt (22) vom Eingriff mit der Stange (15) gelöst ist,
**dadurch gekennzeichnet**, dass:
- der mit einem Innengewinde versehene Abschnitt (22) zur Verschiebung in der entsprechenden Klemmbacke (2) entlang einer Schiebeachse (K) geführt ist,
- die Schiebeachse zur Achse (L) des Gewindes geneigt ist und diese schneidet,
- die Richtung der Schiebeachse (K) und der Gewindewinkel (C) so ausgewählt sind, dass die Klemmlast (H), die auf die Stange (15) wirkt, eine Komponente (T) entlang der Schiebeachse (K) des mit einem Innengewinde versehenen Abschnittes (22) besitzt,
- die Komponente (T) der Klemmlast (H) Null ist oder höchstens dazu neigt, den mit einem Innengewinde versehenen Abschnitt (22) zu der Betriebsstellung hin zu belasten.

2. Klemmstativ nach Anspruch 1, wobei die Klemmeinrichtung die Gewindestange (15) und einen Betätigungsfortsatz (17) davon umfasst, mittels dessen die Stange (15) in dem mit einem Innengewinde versehenen Abschnitt (22) verschraubbar ist.

3. Klemmstativ nach Anspruch 1 oder 2, wobei der mit einem Innengewinde versehene Abschnitt (22) zum Betriebszustand hin elastisch beaufschlagt ist.

4. Klemmstativ nach einem oder mehreren der vorstehenden Ansprüche, wobei die erste Klemmbacke (2) einen Druckknopf (25) besitzt, der dem mit einem Innengewinde versehenen Abschnitt (22) zugeordnet ist zu seiner Bewegung zum Außerbetriebszustand hin.

5. Klemmstativ nach einem oder mehreren der vorstehenden Ansprüche, mit einem mittigen Abschnitt (4), der die Klemmbacken (2, 3) steif verbindet und in dem eine stangenförmige Abstützvorrichtung (6) einstellbar verschiebbar ist und wenigstens ein Befestigungselement (7, 8) für die Ausrüstung an ihren einander gegenüberliegenden axialen Enden trägt.

6. Klemmstativ nach Anspruch 5, wobei die Abstützvorrichtung (6) an ihren gegenüberliegenden Enden jeweilige Vertiefungen oder Aufnahmen (9, 10) besitzt, in denen ein Halteelement (11), welches an dem mittigen Abschnitt (4) angeordnet ist, lösbar in Eingriff bringbar ist, wobei das Halteelement (11) und die Aufnahmen (9, 10) eine Einrichtung bilden für die Verhinderung des Verlierens der stangenförmigen Abstützvorrichtung (6).

## Revendications

1. Etrier de serrage destiné au support d'un appareil optique et photographique, comprenant une première et une seconde mâchoire (2, 3), un organe (5) ayant une tige (15) montée sur la première mâchoire (2), un dispositif de retenue placé entre la tige (15) et la première mâchoire (2) et destiné à encaisser une force de serrage (H) appliquée entre l'organe (5) et la seconde mâchoire (3), et un dispositif de serrage destiné à appliquer la force de serrage (H), dans lequel le dispositif de retenue peut être commuté sélectivement entre un état inopérant dans lequel la tige (15) peut coulisser librement par rapport à la première mâchoire (2) en s'écartant et en se rapprochant de la seconde mâchoire (3), et une condition de travail dans laquelle la tige. (15) est retenue sur la première mâchoire (2) afin qu'elle encaisse la force de serrage (H), et dans lequel la tige (15) a un axe prédéterminé (L) et un angle de filetage (C) et le dispositif de retenue comporte au moins un secteur taraudé (22) qui peut entourer la tige sur au plus la moitié de sa circonférence et qui est mobile entre l'état de travail dans lequel le secteur taraudé (22) et le filetage de la tige (15) sont en prise et l'état inopérant, dans lequel le secteur taraudé (22) est séparé de la tige (15), caractérisé en ce que :
le secteur taraudé (22) est guidé afin qu'il coulisse dans la mâchoire correspondante (2) le long d'un axe de coulissement (K),
l'axe de coulissement est incliné par rapport à l'axe (L) du filetage et recoupe cet axe,
la direction de l'axe de coulissement (K) et l'angle de filetage (C) étant choisis afin que la force de serrage (H) agissant sur la tige (15) ait une composante (T) suivant l'axe de coulissement (K) du secteur taraudé (22), et
ladite composante (T) de la force de serrage (H) est nulle ou au plus a tendance à repousser le secteur taraudé (22) vers l'état de travail.

2. Etrier de serrage selon la revendication 1, dans lequel le dispositif de serrage comporte une tige filetée (15) et un accessoire de manoeuvre (17) de cette tige grâce auquel la tige (15) peut être vissée dans le secteur taraudé (22).

3. Etrier de serrage selon la revendication 1 ou 2, dans lequel le secteur taraudé (22) est repoussé élastiquement vers la position de travail.

4. Etrier de serrage selon l'une quelconque des revendications précédentes, dans lequel la première mâchoire (2) possède un bouton-poussoir (25) associé au secteur taraudé (22) afin que celui-ci soit déplacé vers la position inopérante.

5. Etrier de serrage selon une ou plusieurs des revendications précédentes, comprenant une partie centrale (4) qui raccorde les mâchoires (2, 3) rigidement et dans laquelle un support (6) analogue à une tige peut coulisser de manière réglable et porte au moins un élément de fixation (7, 8) d'un appareil à ses extrémités axiales opposées.

6. Etrier de serrage selon la revendication 5, dans lequel le support (6) a, à ses extrémités respectives, des cavités respectives (9, 10) dans lesquelles un élément de retenue (11) monté sur la partie centrale (4) peut être introduit temporairement, l'élément de retenue (11) et les cavités (9, 10) constituant un dispositif destiné à empêcher la perte du support analogue à une tige (6).
